# EUROPÄISCHE PATENTSCHRIFT

(11) **EP 1 331 754 B1**
(45) Veröffentlichungstag und Bekanntmachung des Hinweises auf die Patenterteilung: **27.08.2003**
(21) Anmeldenummer: 02405043.7
(22) Anmeldetag: 24.01.2002
(51) Int. Cl.: H04L 12/14, H04L 12/28

(54) **Zugangskontrollverfahren für ein drahtloses lokales Kommunikationsnetz**
Method controlling access in a Wireless Local Area Network
Procédé de contrôle d'accès dans un réseau local à transmission radio

(43) Veröffentlichungstag der Anmeldung: 30.07.2003
(73) Patentinhaber: Swisscom Mobile AG, 3050 Bern (CH)
(72) Erfinder: Hauenstein, Felix, 3672 Oberdiessbach (CH); Lauper, Eric, 3014 Bern (CH)
(74) Vertreter: BOVARD AG - Patentanwälte

(56) Entgegenhaltungen:
- WO-A-01/41081
- GB-A- 2 350 970
- WEI-LING WANG ET AL: "A protocol for billing mobile network access devices operating in foreign networks" PROCEEDINGS - THE WORKSHOP ON ENABLING TECHNOLOGIES: INFRASTRUCTURE FOR COLLABORATIVE ENTERPRISES, IEEE COMPUTER SOCIETY PRESS, LOS ALAMITOS, CA, US, 17. Juni 1998 (1998-06-17), Seiten 262-268, XP002145933 ISSN: 1080-1383

## Beschreibung

### Technisches Gebiet

Die vorliegende Erfindung betrifft ein drahtloses lokales Kommunikationsnetz, ein Zugangskontrollverfahren für ein drahtloses lokales Kommunikationsnetz und dafür geeignete Vorrichtungen. Die Erfindung betrifft insbesondere ein drahtloses lokales Kommunikationsnetz, das mindestens ein drahtloses Kommunikationsendgerät, mindestens eine Zugangspunkteinheit mit einem Sender/Empfänger für die Kommunikation mit dem drahtlosen Kommunikationsendgerät über eine Luftschnittstelle und ein Zugangskontrollmodul zur Kontrolle der Zugangsberechtigung des drahtlosen Kommunikationsendgeräts umfasst, ein Zugangskontrollverfahren für ein solches drahtloses lokales Kommunikationsnetz und einen dafür geeigneten Zugangskontrollserver und ein Computerprogrammprodukt zur Steuerung dieses Zugangskontrollservers.

### Stand der Technik

Drahtlose lokale Kommunikationsnetze, so genannte Wireless Local Area Networks (WLAN), dienen Benutzern mit mobilen Kommunikationsendgeräten als Kommunikationssysteme für die Kommunikation mit anderen Kommunikationseinheiten, entweder als Erweiterung für den Zugang auf ein Festnetz, beispielsweise ein lokales Kommunikationsnetz (Local Area Network, LAN), das öffentliche geschaltete Telefonnetz (Public Switched Telephone Network, PSTN) oder das Internet, oder als Alternative zu einem (verdrahteten) Festnetz für die Kommunikation mit anderen Kommunikationsendgeräten. In einem WLAN werden Daten jeweils über eine Luftschnittstelle übertragen. Ohne eine physikalische Verbindung zu verwenden, werden dabei Informationen mittels elektromagnetischer Wellen, insbesondere Funk- oder Infrarotwellen, von einem Punkt an einen anderen übermittelt. Ein typisches WLAN umfasst mindestens einen Zugangspunkt, einen so genannten Access Point (AP), und mindestens ein drahtloses Kommunikationsendgerät, beispielsweise einen Laptop- oder Palmtop Computer, beispielsweise einen sogenannter Personal Data Assistant (PDA), oder ein Mobiltelefon. Ein AP umfasst mindestens einen Sender/Empfänger und eine Antenne für den Datenaustausch mit den drahtlosen Kommunikationsendgeräten über eine Luftschnittstelle. Eine Vorrichtungsanordnung, die einen AP verkörpert, wird in diesem Text als Zugangspunkteinheit bezeichnet. In einem WLAN können mehrere Zugangspunkteinheiten über Kommunikationskanäle miteinander verbunden sein. Ein oder mehrere Zugangspunkteinheiten eines WLANs können mit einem Festnetz verbunden sein, wobei der Zugang vom WLAN zum Festnetz typischerweise durch Zugangskontrollen geschützt ist.

In der Patentanmeldung EP 1 081 895 A1 wird ein gesichertes WLAN beschrieben, in welchem mehrere Zugangspunkteinheiten des WLAN mit einem Authentifizierungsserver verbunden sind, der den Zugang zu einem Festnetz kontrolliert. Gemäss EP 1 081 895 A1 übermitteln die drahtlosen Kommunikationsendgeräte bei der Kommunikationsaufnahme jeweils eine verschlüsselte Authentifizierungsmeldung an eine Zugangspunkteinheit des WLAN. Eine Authentifizierungsmeldung umfasst gemäss EP 1 081 895 A1 Validierungsinformationen über das drahtlose Kommunikationsendgerät und über seinen Benutzer, beispielsweise einen Gerätecode, einen Benutzernamen und ein Benutzerpasswort. Die Zugangspunkteinheit verfügt gemäss EP 1 081 895 A1 über ein Authentifizierungsmodul, das die Authentizität des drahtlosen Kommunikationsendgeräts anhand des empfangenen Gerätecodes überprüft. Gemäss EP 1 081 895 A1 werden der Benutzername und das Benutzerpasswort, die von einem authentifizierten drahtlosen Kommunikationsendgerät empfangen wurden, von der Zugangspunkteinheit zur Überprüfung an den Authentifizierungsserver übermittelt, der dem drahtlosen Kommunikationsendgerät bei positiver Authentifizierung des Benutzers den Zugang zum Festnetz gewährt.

Das in EP 1 081 895 A1 beschriebene System ermöglicht die Zugangskontrolle eines drahtlosen Kommunikationsendgeräts zu einem WLAN und einem damit verbundenen Festnetz. Das System gemäss EP 1 081 895 A1 weist jedoch den Nachteil auf, dass sowohl das drahtlose Kommunikationsendgerät als auch sein Benutzer bei der Zugangspunkteinheit des WLAN, respektive beim Authentifizierungsserver, registriert sein müssen. Diese Registrierung verunmöglicht die Wahrung der Anonymität des Benutzers und erfordert in der Regel zudem einen beträchtlichen administrativen und/oder technischen Aufwand.

In der Patentanmeldung WO 01/41081 wird ein Verfahren und System für die Kontrolle des Zugriffs auf Dienstleistungen in einem drahtlosen Kommunikationsnetz beschrieben. Gemäss WO 01/41081 werden codierte Tokens, die gegen Vorauszahlung erstanden werden können, für den Zugang zu drahtlosen lokalen Netzen drahtlos an eine Zugangskontrollvorrichtung übermittelt, wo sie mittels einer Datenbank validiert werden. Entsprechend dem Inhalt eines validierten Tokens können gemäss WO 01/41081 bestimmte Bedingungen wie Zugriffszeitfenster definiert werden.

### Darstellung der Erfindung

Es ist eine Aufgabe der vorliegenden Erfindung, ein drahtloses lokales Kommunikationsnetz, ein Zugangskontrollverfahren für ein drahtloses lokales Kommunikationsnetz und dafür geeignete Vorrichtungen vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die Erfindung insbesondere dadurch erreicht, dass ein drahtloses Kommunikationsendgerät im drahtlosen lokalen Kommunikationsnetz ein Anfragemodul zur Übermittlung eines vorausbezahlten Wertcodes über die Luftschnittstelle an eine Zugangspunkteinheit des drahtlosen lokalen Kommunikationsnetzes umfasst, dass das drahtlose lokale Kommunikationsnetz eine Wertcodedatenbank umfasst, dass das Zugangskontrollmodul des drahtlosen lokalen Kommunikationsnetzes ein Validierungsmodul zur Validierung des empfangenen Wertcodes in der Wertcodedatenbank umfasst, dass das Zugangskontrollmodul ein Freischaltmodul umfasst, zum Freischalten des Zugangs zu zugangskontrollierten Kommunikationsnetzmodulen für das drahtlose Kommunikationsendgerät, und dass das Zugangskontrollmodul ein Entwertungsmodul umfasst, zum Entwerten des validierten empfangenen Wertcodes in der Wertcodedatenbank. Ein solches drahtloses lokales Kommunikationsnetz hat den Vorteil, dass der Zugang von drahtlosen Kommunikationsendgeräten zu Kommunikationsnetzmodulen kontrolliert werden kann, ohne dass dazu Benutzer oder deren Kommunikationsendgeräte registriert werden müssen und ohne dass die Benutzer dabei ihre Identität preisgeben müssen. Die zugangskontrollierten Kommunikationsnetzmodule umfassen vorzugsweise ein Kommunikationsmodul für die Datenkommunikation mit anderen Kommunikationseinheiten über das drahtlose lokale Kommunikationsnetz, beispielsweise ein Kommunikationsmodul für die Datenkommunikation mit anderen Kommunikationsendgeräten im drahtlosen lokalen Kommunikationsnetz oder ein Kommunikationsmodul für die Datenkommunikation mit Kommunikationseinheiten in einem mit dem drahtlosen lokalen Kommunikationsnetz verbundenen Kommunikationsnetz, z.B. das Internet. In einem solchen drahtlosen lokalen Kommunikationsnetz kann folglich der Zugang zum drahtlosen lokalen Kommunikationsnetz und zu damit verbundenen Kommunikationsnetzen kontrolliert und gegen einen vorausbezahlten Wertcode gewährt werden.

Erfindungsgemäss befindet sich das Zugangskontrollmodul in einem mit der Zugangspunkteinheit verbundenen Zugangskontrollserver und die Zugangspunkteinheit umfasst ein Kommunikationsmodul zum Übermitteln des vorausbezahlten Wertcodes und einer Betreiberidentifizierung an den Zugangskontrollserver. Der Zugangskontrollserver umfasst vorzugsweise ein Verrechnungsmodul, zum Gutschreiben eines Geldbetrags für den Betreiber der Zugangspunkteinheit, der durch die Betreiberidentifizierung identifiziert wird. Der Zugangskontrollserver ermöglicht eine zentralisierte Durchführung der Zugangskontrolle für mehrere Zugangspunkteinheiten, wobei die Zugangspunkteinheiten gegebenenfalls verschiedenen drahtlosen lokalen Kommunikationsnetzen zugeordnet sind. Durch die Übermittlung der Betreiberidentifizierung an den Zugangskontrollserver kann zudem die Gutschrift von Geldbeträgen für die Betreiber von Zugangspunkteinheiten zentralisiert und in Abhängigkeit der Benutzung ihrer jeweiligen Zugangspunkteinheiten vorgenommen werden. Diese bevorzugte Ausführungsvariante ermöglicht also die Zentralisierung der Zugangskontrolle und der Verrechnung für mehrere Zugangspunkteinheiten und drahtlose lokale Kommunikationsnetze.

In einer Ausführungsvariante umfasst das Zugangskontrollmodul ein Sperrmodul zum Bestimmen von Sperrbedingungen basierend auf dem empfangenen Wertcode und zum Sperren des Zugangs zu den zugangskontrollierten Kommunikationsnetzmodulen für das drahtlose Kommunikationsendgerät beim Eintreten der bestimmten Sperrbedingungen. Diese Ausführungsvariante hat den Vorteil, dass Wertcodes mit verschiedenen Nennwerten ausgegeben werden können, die zu unterschiedlichen Dienstleistungen berechtigen, beispielsweise zu einer unterschiedlichen maximalen Freischaltdauer (Zugangsdauer) oder zu verschiedenen maximalen über das drahtlose lokale Kommunikationsnetz übertragenen Datenvolumen.

In einer Ausführungsvariante umfasst das Zugangskontrollmodul ein Sperrmodul zum Sperren des Zugangs zu den zugangskontrollierten Kommunikationsnetzmodulen für das drahtlose Kommunikationsendgerät gemäss einer festgelegten Freischaltzeit oder gemäss einem festgelegten Datenvolumen. Diese Ausführungsvariante hat den Vorteil, dass keine Wertcodes mit verschiedenen Nennwerten ausgegeben und verwaltet werden müssen, so dass alle Wertcodes zu den gleichen Dienstleistungen berechtigen, beispielsweise zu einer Freischaltzeit während einer festgelegten Freischaltdauer oder bis zu einem festgelegten Sperrzeitpunkt oder bis zu einem festgelegten maximalen über das drahtlose lokale Kommunikationsnetz übertragenen Datenvolumen.

Zusätzlich zum erfindungsgemässen drahtlosen lokalen Kommunikationsnetz bezieht sich die vorliegende Erfindung auf ein Zugangskontrollverfahren für ein drahtloses lokales Kommunikationsnetz, auf einen dafür geeigneten Zugangskontrollserver und auf ein Computerprogrammprodukt zur Steuerung dieses Zugangskontrollservers

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch drahtlose Kommunikationsendgeräte illustriert, die jeweils über Zugangspunkteinheiten mit einem Zugangskontrollserver verbunden sind.
Figur 2 zeigt ein Flussdiagram, welches schematisch eine mögliche Schrittfolge bei der Zugangskontrolle illustriert.

### Wege zur Ausführung der Erfindung

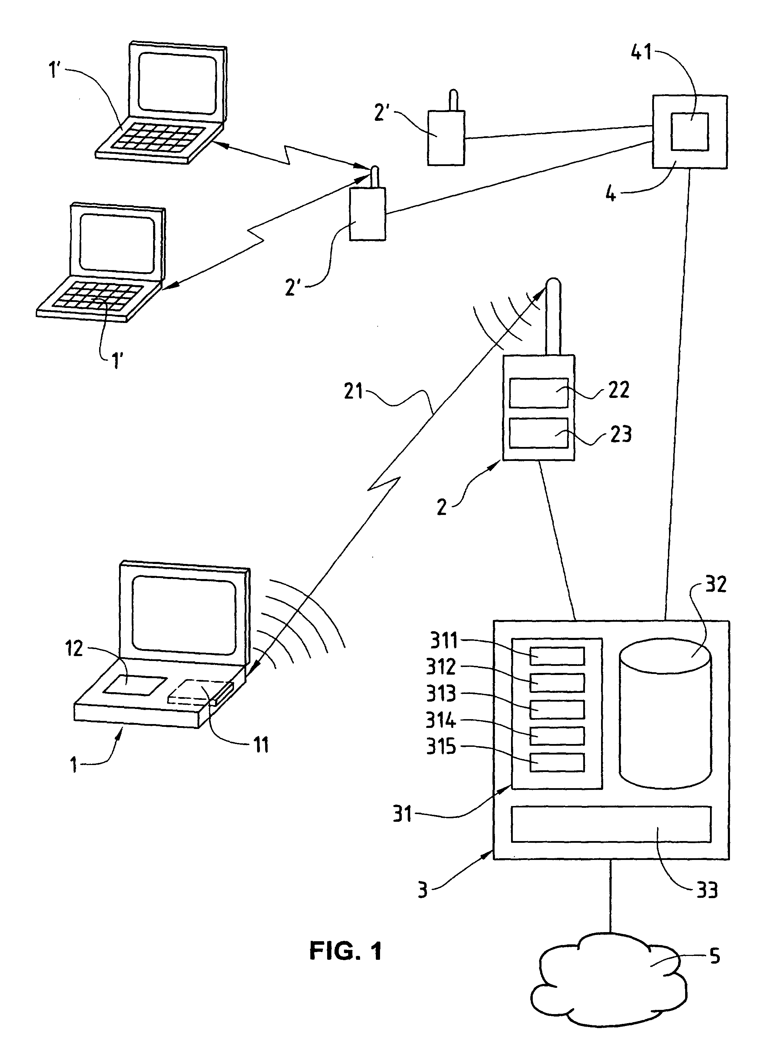

In der Figur 1 bezieht sich das Bezugszeichen 1 auf ein drahtloses Kommunikationsendgerät, beispielsweise ein Laptop- oder Palmtop Computer, beispielsweise ein so genannter Personal Data Assistant (PDA), oder ein Mobiltelefon. Das drahtlose Kommunikationsendgerät 1 umfasst ein Kommunikationsmodul 11 für die Datenkommunikation über ein drahtloses lokales Kommunikationsnetz, ein so genanntes WLAN (Wireless Local Area Network). Das Kommunikationsmodul 11 ist fest im drahtlosen Kommunikationsendgerät 1 eingebaut oder in der Form einer Einschubkarte entfernbar mit dem drahtlosen Kommunikationsendgerät 1 verbunden. Das drahtlose lokale Kommunikationsnetz basiert vorzugsweise auf Radiowellen, z.B. gemäss der Norm IEEE 802.11 (Institute of Electrical and Electronics Engineers) oder gemäss einer Norm für ein Piconet, beispielsweise gemäss der unter dem Namen Bluetooth bekannten Geräteschnittstelle, es kann aber auch auf Infrarot basieren. Das drahtlose Kommunikationsendgerät 1 umfasst zudem ein Anfragemodul 12, ein programmiertes Softwaremodul, das auf einem Prozessor des drahtlosen Kommunikationsendgeräts 1 ausgeführt wird. Das Anfragemodul 12 übermittelt unter Zuhilfenahme des Kommunikationsmoduls 11 einen Wertcode über eine Luftschnittstelle 21 an eine Zugangspunkteinheit 2 des drahtlosen lokalen Kommunikationsnetzes. In der Figur 1 bezieht sich das Bezugszeichen 1' ebenfalls auf ein drahtloses Kommunikationsendgerät, das dem drahtlosen Kommunikationsendgerät 1 entspricht aber weniger detailliert dargestellt ist.

Wie in der Figur 1 dargestellt ist, umfasst das drahtlose lokale Kommunikationsnetz Zugangspunkteinheiten 2, 2', so genannte Access Points. Zugangspunkteinheiten 2, 2' können beispielsweise an öffentlich zugänglichen Orten, wie Bahnhöfe, Flughäfen oder Museen, an Orten mit kontrolliertem öffentlichem Zugang, wie Hotels, Konferenzräume oder Schulen, oder an Orten mit kontrolliertem privatem Zugang, wie Firmengebäude oder -gelände, aufgestellt werden. Wie in der Figur 1 für die Zugangspunkteinheit 2 schematisch dargestellt ist, umfassen die Zugangspunkteinheiten 2, 2' jeweils einen Sender/Empfänger 22 für die Datenkommunikation mit den drahtlosen Kommunikationsendgeräten 1, 1' über die Luftschnittstelle 21.

Die Zugangspunkteinheit 2 ist über eine Kommunikationsverbindung direkt mit dem Zugangskontrollserver 3 verbunden. Wie für die Zugangspunkteinheiten 2' schematisch dargestellt ist, können auch mehrere Zugangspunkteinheiten 2' über einen Netzserver 4 mit dem Zugangskontrollserver 3 verbunden werden. Der Netzserver 4 umfasst ein Vermittlungsmodul 41, welches die Datenkommunikation für drahtlose Kommunikationsendgeräte 1' über mehrere Zugangspunkteinheiten 2' koordiniert, so dass drahtlose Kommunikationsendgeräte 1' über verschiedene Zugangspunkteinheiten 2' miteinander kommunizieren können und dass ein drahtloses Kommunikationsendgerät 1' sich zwischen Zugangspunkteinheiten 2' bewegen kann. Das Vermittlungsmodul 41 ermöglicht zudem die Datenkommunikation mit dem Zugangskontrollserver 3.

Wie in der Figur 1 für die Zugangspunkteinheit 2 schematisch dargestellt ist, umfassen die Zugangspunkteinheiten 2, 2' zudem ein Kommunikationsmodul 23 für die Datenkommunikation mit anderen Kommunikationseinheiten, die mit der betreffenden Zugangspunkteinheit 2, 2' verbunden sind, nämlich andere drahtlose Kommunikationsendgeräte 1, 1', der Zugangskontrollserver 3 und der Netzserver 4.

Der Zugangskontrollserver 3 umfasst eine Wertcodedatenbank 32. Der Zugangskontrollserver 3 und die Wertcodedatenbank 32 sind auf einem gemeinsamen oder auf separaten Computern ausgeführt. Die in der Wertcodedatenbank 32 gespeicherten Wertcodes sind vorzugsweise mehrstellige alphanumerische oder numerische Codes. Die Wertcodes sind beispielsweise so strukturiert, dass sie Codes zur Identifizierung eines geografischen Gebiets, eines Code-Ausgebers, eines Netzbetreibers, einer Dienstleistung und/oder einer Dienstleistungsklasse umfassen. Diese Angaben können aber auch in der Wertcodedatenbank 32 den individuellen Wertcodes zugeordnet sein. In einer Ausführungsvariante sind den Wertcodes in der Wertcodedatenbank 32 jeweils Nennwerte zugeordnet, die einem Geldbetrag, einer maximalen Zugangszeit und/oder einem maximalen Datenvolumen entsprechen. Einem Wertcode können auch spezifische Diensttypen oder Zugangsrechte zugeordnet sein.

Der Zugangskontrollserver 3 umfasst ein Kommunikationsmodul 33 für die Datenkommunikation über das mit dem Zugangskontrollserver 3 verbundene Kommunikationsnetz 5. Das Kommunikationsnetz 5 ist ein Festnetz, beispielsweise ein lokales Kommunikationsnetz (Local Area Network, LAN), das öffentliche geschaltete Telefonnetz (Public Switched Telephone Network, PSTN) oder das Internet. Der Zugangskontrollserver 3 umfasst zudem ein Zugangskontrollmodul 31 mit einem Validierungsmodul 311, einem Freischaltmodul 312, einem Entwertungsmodul 313, einem Sperrmodul 314 und einem Verrechnungsmodul 315, die jeweils als programmierte Softwaremodule ausgeführt sind und einen Prozessor des Zugangskontrollservers 3 steuern. Das Zugangskontrollmodul 31 wird dem (den) Prozessor(en) des Zugangskontrollservers 3 mittels eines Computerprogrammprodukts zugeführt, das ein computerlesbares Medium umfasst.

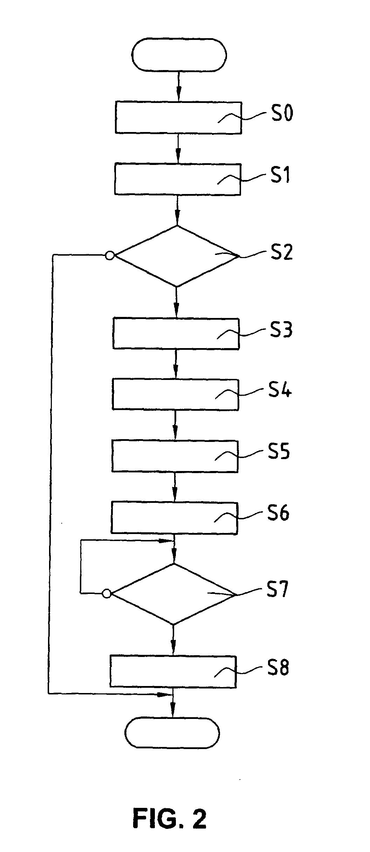

In den folgenden Abschnitten wird der Ablauf der Zugangskontrolle zum drahtlosen lokalen Kommunikationsnetz mit Bezug auf die Figur 2 beschrieben.

Der Benutzer des drahtlosen Kommunikationsendgeräts 1 erhält einen Wertcode gegen Bezahlung, beispielsweise bei einer Verkaufsstelle, aufgedruckt auf einer Wertkarte unter einer entfernbaren Abdeckschicht, oder bei einem Ausgabeterminal, angezeigt auf einem Bildschirm oder ausgedruckt auf einem Stück Papier. Im Schritt S0 wird der vorausbezahlte Wertcode durch das Anfragemodul 12 des drahtlosen Kommunikationsendgeräts 1 vom Benutzer entgegengenommen und mittels des Kommunikationsmoduls 11 vom drahtlosen Kommunikationsendgerät 1 über die Luftschnittstelle 21 an die Zugangspunkteinheit 2 übermittelt. Das Anfragemodul 12 nimmt den Wertcode vom Benutzer beispielsweise über Eingabemittel des drahtlosen Kommunikationsendgeräts 1 vom Benutzer entgegen oder liest den Wertcode von einem Datenträger, der über eine kontaktbehaftete oder eine kontaktlose Schnittstelle mit dem drahtlosen Kommunikationsendgerät 1 verbunden wird.

Im Schritt S1 wird der empfangene Wertcode durch das Kommunikationsmodul 23 an das Zugangskontrollmodul 31 weitergeleitet. Das Zugangskontrollmodul 31 befindet sich vorzugsweise wie oben beschrieben im Zugangskontrollserver 3, es könnte in einer anderen Ausführung aber auch in der Zugangspunkteinheit 2 ausgeführt werden. Die Patentansprüche werden jedoch nicht auf diese Ausführung ausgedehnt. Zusammen mit dem Wertcode überträgt das Kommunikationsmodul 23 eine Betreiberidentifizierung des Betreibers der Zugangskontrolleinheit 2 an das Zugangskontrollmodul 31. An Stelle der Betreiberidentifizierung kann auch eine Identifizierung der Zugangspunkteinheit 2 an das Zugangskontrollmodul übertragen werden und dort die zugeordnete Betreiberidentifizierung des dafür zuständigen Betreibers bestimmt werden.

Im Schritt S2 wird durch das Validierungsmodul 311 überprüft, ob der empfangene Wertcode mit einem gültigen, in der Wertcodedatenbank 32 gespeicherten Wertcode übereinstimmt. Falls der empfangene Wertcode nicht durch das Validierungsmodul 311 validiert werden kann, wird dem drahtlosen Kommunikationsendgerät 1 der Zugang zu den zugriffskontrollierten Kommunikationsnetzmodulen und dadurch der Zugang zum drahtlosen lokalen Kommunikationsnetz und/oder zum Kommunikationsnetz 5 verwehrt. In einer Ausführung kann der Zugang ohne gültigen Wertcode beschränkt freigeschaltet werden, beispielsweise kann der Zugang auf Hilfsinformationen beschränkt werden, die darüber informieren, wo gültige Wertcodes erhältlich sind und wie vorzugehen ist, um sich mit einem Wertcode unbeschränkten Zutritt zu verschaffen. Die Gültigkeit des Wertcodes kann auch von der empfangenen, respektive hergeleiteten, Betreiberidentifizierung oder von der empfangenen Identifizierung der Zugangspunkteinheit 2 abhängig gemacht werden. So können beispielsweise Wertcodes für ein gewisses geografisches Gebiet, von einem gewissen Code-Ausgeber, für einen gewissen Netzbetreiber, für eine gewisse Dienstleistung, für eine gewisse Dienstleistungsklasse oder Diensttyp, und/oder mit einem gewissen Nennwert oder Zugangsrecht beim Zugang über gewisse Zugangspunkteinheiten 2 vom Validierungsmodul 311 als ungültig betrachtet werden.

Durch Anwendung der Zugangskontrolle auf das Kommunikationsmodul 23 wird dem drahtlosen Kommunikationsendgerät 1 der Zugang zum drahtlosen lokalen Kommunikationsnetz verwehrt oder freigeschaltet. Durch Anwendung der Zugangskontrolle auf das Vermittlungsmodul 43 wird der Zugang des drahtlosen Kommunikationsendgeräts 1 auf den Teil des drahtlosen lokalen Kommunikationsnetzes eingeschränkt, der durch die betreffende Zugriffspunkteinheit 2 abgedeckt wird, oder der Zugang wird auch auf weitere mit der Zugriffspunkteinheit 2 verbundene Zugriffspunkteinheiten 2' freigeschaltet. Das heisst, der Zugang des drahtlosen Kommunikationsendgeräts 1 wird auf Kommunikationseinheiten eingeschränkt, die direkt mit der betreffenden Zugriffspunkteinheit 2' verbunden sind, oder der Zugang auf Kommunikationseinheiten, die mit anderen Zugriffspunkteinheiten 2' verbunden sind, wird freigeschaltet. Durch Anwendung der Zugangskontrolle auf das Kommunikationsmodul 33 wird dem drahtlosen Kommunikationsendgerät 1 der Zugang zum Kommunikationsnetz 5, das mit dem drahtlosen lokalen Kommunikationsnetz verbunden ist, verwehrt oder freigeschaltet. Mittels weiteren nicht dargestellten zugriffskontrollierten Kommunikationsnetzmodulen kann dem drahtlosen Kommunikationsendgerät 1 der Zugang zu spezifischen Kommunikationseinheiten, wie Datenbanken, Datenserver, Mailserver, File-Transfer-Server oder Ähnlichen, verwehrt werden.

Falls der empfangene Wertcode durch das Freischaltmodul 312 validiert werden kann, wird im Schritt S3 der Zugang zu den zugriffskontrollierten Kommunikationsnetzmodulen für das drahtlose Kommunikationsendgerät 1 freigeschaltet.

Im Schritt S4 werden in einer Ausführungsvariante durch das Sperrmodul 314 die Sperrbedingungen für den empfangenen Wertcode bestimmt. Die Sperrbedingungen ergeben sich beispielsweise aus der Dienstleistungsklasse, dem Nennwert, dem spezifischen Diensttyp oder den Zugangsrechten, die im Wertcode enthalten oder in der Wertcodedatenbank 32 dem Wertcode zugeordnet sind. Die Sperrbedingungen entsprechen beispielsweise einer maximalen Freischaltdauer, während der dem drahtlosen Kommunikationsendgerät 1 der Zugang zu den zugriffskontrollierten Kommunikationsnetzmodulen 23, 33, 41 gewährt wird, und/oder einem maximalen Datenvolumen, welches das drahtlose Kommunikationsendgerät 1 über das drahtlose Kommunikationsnetz, respektive über die zugriffskontrollierten Kommunikationsnetzmodule 23, 33, 41, beziehen kann. Die Sperrbedingungen können aber auch durch eine festgelegte Freischaltzeit, beispielsweise durch eine festgelegte maximale Freischaltdauer oder einen festgelegten Sperrzeitpunkt, oder durch ein maximales Datenvolumen definiert sein, die unabhängig vom empfangenen Wertcode sind.

Im Schritt S5 wird dem Betreiber, der durch die empfangene oder im empfangenen Wertcode enthaltene Betreiberidentifizierung identifiziert wird, durch das Verrechnungsmodul 315 ein Geldbetrag gutgeschrieben. Der Geldbetrag entspricht beispielsweise einem festen Anteil am Nennwert des Wertcodes oder er ist unabhängig vom Wertcode festgelegt. Der Geldbetrag wird einem Konto gutgeschrieben, das dem betreffenden Betreiber zugeordnet ist.

Im Schritt S6 wird der empfangen Wertcode in der Wertcodedatenbank 32 durch das Entwertungsmodul 313 entwertet, entweder durch entsprechende Markierung oder durch Löschen des betreffenden Wertcodes.

Im Schritt S7 wird durch das Sperrmodul 314 überprüft, ob die Sperrbedingungen eingetreten sind und gegebenenfalls im Schritt S8 dem drahtlosen Kommunikationsendgerät 2 der Zugang zu den zugriffskontrollierten Kommunikationsnetzmodulen 23, 33, 41 gesperrt.

### Gewerbliche Anwendbarkeit

Die vorliegende Erfindung ermöglicht insbesondere den Zugang zu drahtlosen lokalen Kommunikationsnetzen, so genannte WLAN, und den Zugang über solche WLAN zu weiteren Kommunikationseinheiten, wie beispielsweise das Internet, zu kontrollieren.

## Patentansprüche

1. Ein drahtloses lokales Kommunikationsnetz, umfassend:
mindestens ein drahtloses Kommunikationsendgerät (1),
mindestens eine Zugangspunkteinheit (2) mit einem Sender/Empfänger (22) für die Kommunikation mit dem drahtlosen Kommunikationsendgerät (1) über eine Luftschnittstelle (21),
einen mit der Zugangspunkteinheit (2) verbundenen Zugangskontrollserver (3) mit einem Zugangskontrollmodul (31) zur Kontrolle der Zugangsberechtigung des drahtlosen Kommunikationsendgeräts (1),
ein Zugangskontrollmodul (31) zur Kontrolle der Zugangsberechtigung des drahtlosen Kommunikationsendgeräts (1),
im drahtlosen Kommunikationsendgerät (1) ein Anfragemodul (12) zur Übermittlung eines vorausbezahlten Wertcodes über die Luftschnittstelle (21) an die Zugangspunkteinheit (2),
eine Wertcodedatenbank (32),
im Zugangskontrollmodul (31) ein Validierungsmodul (311) zur Validierung des empfangenen Wertcodes in der Wertcodedatenbank (32),
im Zugangskontrollmodul (31) ein Freischaltmodul (312), zum Freischalten des Zugangs zu zugangskontrollierten Kommunikationsnetzmodulen (23, 33) für das drahtlose Kommunikationsendgerät (1), und
im Zugangskontrollmodul (31) ein Entwertungsmodul (313), zum Entwerten des validierten empfangenen Wertcodes in der Wertcodedatenbank (32),
**dadurch gekennzeichnet,**
**dass** die Zugangspunkteinheit (2) ein Kommunikationsmodul (23) umfasst, zum Übermitteln des vorausbezahlten Wertcodes und einer Betreiberidentifizierung von der Zugangspunkteinheit an den Zugangskontrollserver (3).

2. Das drahtlose lokale Kommunikationsnetz gemäss Anspruch 1, **dadurch gekennzeichnet, dass** der Zugangskontrollserver (3) ein Verrechnungsmodul (315) umfasst, zum Gutschreiben eines Geldbetrags für den Betreiber der Zugangspunkteinheit (2), der durch die Betreiberidentifizierung identifiziert wird.

3. Das drahtlose lokale Kommunikationsnetz gemäss einem der Ansprüche 1 oder 2, **dadurch gekennzeichnet, dass** das Zugangskontrollmodul (31) ein Sperrmodul (314) umfasst, zum Bestimmen von Sperrbedingungen basierend auf dem empfangenen Wertcode und zum Sperren des Zugangs zu den zugangskontrollierten Kommunikationsnetzmodulen (23, 33) für das drahtlose Kommunikationsendgerät (1) beim Eintreten der bestimmten Sperrbedingungen.

4. Das drahtlose lokale Kommunikationsnetz gemäss einem der Ansprüche 1 oder 2, **dadurch gekennzeichnet, dass** das Zugangskontrollmodul (31) ein Sperrmodul (314) umfasst, zum Sperren des Zugangs zu den zugangskontrollierten Kommunikationsnetzmodulen (23, 33) für das drahtlose Kommunikationsendgerät (1) gemäss einer festgelegten Freischaltzeit oder gemäss einem festgelegten Datenvolumen.

5. Das drahtlose lokale Kommunikationsnetz gemäss einem der Ansprüche 1 bis 4, **dadurch gekennzeichnet, dass** die zugangskontrollierten Kommunikationsnetzmodule (23, 33) ein Kommunikationsmodul (23, 33) für die Datenkommunikation mit anderen Kommunikationseinheiten über das drahtlose lokale Kommunikationsnetz umfassen.

6. Ein Zugangskontrollverfahren für ein drahtloses lokales Kommunikationsnetz, in welchem Verfahren ein vorausbezahlter Wertcode durch ein drahtloses Kommunikationsendgerät (1) über eine Luftschnittstelle (21) des drahtlosen lokalen Kommunikationsnetzes an eine Zugangspunkteinheit (2) des drahtlosen lokalen Kommunikationsnetzes übermittelt wird, in welchem Verfahren der empfangene Wertcode zur Kontrolle der Zugangsberechtigung des drahtlosen Kommunikationsendgeräts (1) in einer Wertcodedatenbank (32) validiert wird, in welchem Verfahren der Zugang zu zugangskontrollierten Kommunikationsnetzmodulen (23, 33) für das drahtlose Kommunikationsendgerät (1) freigeschaltet wird und der validierte empfangene Wertcode in der Wertcodedatenbank (32) entwertet wird, **gekennzeichnet durch**
Übermittlung des vorausbezahlten Wertcodes und einer Betreiberidentifizierung von der Zugangspunkteinheit (2) an einen Zugangskontrollserver (3).

7. Das Zugangskontrollverfahren gemäss Anspruch 6, **gekennzeichnet durch** Gutschreiben eines Geldbetrags **durch** den Zugangskontrollserver (3) für den Betreiber der Zugangspunkteinheit (2), der **durch** die Betreiberidentifizierung identifiziert wird.

8. Das Zugangskontrollverfahren gemäss einem der Ansprüche 6 oder 7, **gekennzeichnet durch** Bestimmen von Sperrbedingungen basierend auf dem empfangenen Wertcode und Sperren des Zugangs zu den zugangskontrollierten Kommunikationsnetzmodulen (23, 33) für das drahtlose Kommunikationsendgerät (1) beim Eintreten der bestimmten Sperrbedingungen.

9. Zugangskontrollserver (3), der mit einem drahtlosen lokalen Kommunikationsnetz verbindbar ist, der eine Wertcodedatenbank (32) umfasst und der ein Zugangskontrollmodul (31) zur Kontrolle der Zugangsberechtigung eines drahtlosen Kommunikationsendgeräts (1) zum drahtlosen lokalen Kommunikationsnetz umfasst, wobei das Zugangskontrollmodul (31) ein Validierungsmodul (311) umfasst, zur Validierung eines vom drahtlosen Kommunikationsendgerät (1) über eine Luftschnittstelle (21) des drahtlosen lokalen Kommunikationsnetzes empfangenen vorausbezahlten Wertcodes in der Wertcodedatenbank (32), wobei das Zugangskontrollmodul (31) ein Freischaltmodul (312) umfasst, zum Freischalten des Zugangs zum drahtlosen lokalen Kommunikationsnetz für das drahtlose Kommunikationsendgerät (1), und wobei das Zugangskontrollmodul (31) ein Entwertungsmodul (313) umfasst, zum Entwerten des validierten empfangenen Wertcodes in der Wertcodedatenbank (32), **dadurch gekennzeichnet,**
**dass** der Zugangskontrollserver (3) ein Verrechnungsmodul (315) umfasst, zum Gutschreiben eines Geldbetrags für einen Betreiber einer Zugangspunkteinheit (2) des drahtlosen lokalen Kommunikationsnetzes, der durch eine Betreiberidentifizierung identifiziert wird, die von der Zugangspunkteinheit (2) empfangen wurde, die den vorausbezahlten Wertcode an den Zugangskontrollserver (3) geleitet hat.

10. Der Zugangskontrollserver (3) gemäss Anspruch 9, **dadurch gekennzeichnet, dass** das Zugangskontrollmodul (31) ein Sperrmodul (314) umfasst, zum Bestimmen von Sperrbedingungen basierend auf dem empfangenen Wertcode und zum Sperren des Zugangs zum drahtlosen lokalen Kommunikationsnetz für das drahtlose Kommunikationsendgerät (1) beim Eintreten der bestimmten Sperrbedingungen.

11. Ein Computerprogrammprodukt umfassend: ein computerlesbares Medium mit darin enthaltenen Computerprogrammcodemitteln zur Steuerung eines Prozessors eines mit einem drahtlosen lokalen Kommunikationsnetz verbindbaren Zugangskontrollservers (3), derart, dass der Zugangskontrollserver (3) einen von einem drahtlosen Kommunikationsendgerät (1) über eine Luftschnittstelle (21) des drahtlosen lokalen Kommunikationsnetzes empfangenen vorausbezahlten Wertcode in einer Wertcodedatenbank (32) validiert, dass der Zugangskontrollserver (3) den Zugang zum drahtlosen lokalen Kommunikationsnetz für das drahtlose Kommunikationsendgerät (1) freischaltet, und dass der Zugangskontrollserver (3) den validierten empfangenen Wertcode in der Wertcodedatenbank (32) entwertet, **dadurch gekennzeichnet,**
**dass** das Computerprogrammprodukt weitere Computerprogrammcodemittel umfasst, die den Prozessor des Zugangskontrollservers (3) derart steuern, dass der Zugangskontrollserver (3) einen Geldbetrag für einen Betreiber einer Zugangspunkteinheit (2) des drahtlosen lokalen Kommunikationsnetzes gutschreibt, welcher Betreiber durch eine Betreiberidentifizierung identifiziert wird, die von der Zugangspunkteinheit (2) empfangen wurde, die den vorausbezahlten Wertcode an den Zugangskontrollserver (3) geleitet hat.

12. Das Computerprogrammprodukt gemäss Anspruch 11, **dadurch gekennzeichnet, dass** es weitere Computerprogrammcodemittel umfasst, die den Prozessor des Zugangskontrollservers (3) derart steuern, dass der Zugangskontrollserver (3) basierend auf dem empfangenen Wertcode Sperrbedingungen bestimmt und den Zugang zum drahtlosen lokalen Kommunikationsnetz für das drahtlose Kommunikationsendgerät (1) beim Eintreten der bestimmten Sperrbedingungen sperrt.

## Claims

1. A wireless local communication network, comprising:
at least one wireless communication terminal (1),
at least one access point unit (2) with a transceiver (22) for communication with the wireless communication terminal (1) via an air interface (21),
an access control server (3), connected to the access point unit (2), with an access control module (31) for checking the access authorization of the wireless communication terminal (1),
an access control module (31) for checking the access authorization of the wireless communication terminal (1),
a request module (12), in the wireless communication terminal (1), for transmission of a prepaid value code via the air interface (21) to the access point unit (2),
a value code database (32),
a validation module (311), in the access control module (31), for validation of the received value code in the value code database (32),
a clearance module (312), in the access control module (31), for clearance of access to access-controlled communication network modules (23, 33) for the wireless communication terminal (1), and
a cancellation module (313), in the access control module (31), for cancellation of the received validated value code in the value code database (32),
**characterised**
**in that** the access point unit (2) comprises a communication module (23) for transmission of the prepaid value code and of an operator identification to the access control server (3) from the access point unit.

2. The wireless local communication network according to claim 1, **characterised in that** the access control server (3) comprises a billing module (315) for crediting a monetary amount to the operator of the access point unit (2) identified through the operator identification.

3. The wireless local communication network according to one of the claims 1 or 2, **characterised in that** the access control module (31) comprises a blocking module (314) for determining blocking conditions based on the received value code and for blocking access for the wireless communication terminal (1) to the access-controlled communication network modules (23, 33) upon fulfilment of the determined blocking conditions.

4. The wireless local communication network according to one of the claims 1 or 2, **characterised in that** the access control module (31) comprises a blocking module (314) for blocking access for the wireless communication terminal (1) to the access-controlled communication network modules (23, 33) according to a predetermined clearance time or according to a predetermined data volume.

5. The wireless local communication network according to one of the claims 1 to 4, **characterised in that** the access-controlled communication modules (23, 33) comprise a communication module (23, 33) for data communication with other communication units over the wireless local communication network.

6. An access control method for a wireless local communication network, in which method a prepaid value code is transmitted by a wireless communication terminal (1) via an air interface (21) of the wireless local communication network to an access point unit (2) of the wireless local communication network, in which method the received value code for checking the access authorization of the wireless communication terminal (1) is validated in a value code data base (32), in which method access to access-controlled communication network modules (23, 33) is cleared for the wireless communication terminal (1), and the received validated value code is cancelled in the value code database (32), **characterised by**
transmission of the prepaid value code and of an operator identification from the access point unit (2) to an access control server (3).

7. The access control method according to claim 6, **characterised by** crediting of a monetary amount by the access control server (3) to the operator of the access point unit (2) identified through the operator identification.

8. The access control method according to claim 6 or 7, **characterised by** determination of blocking conditions based on the received value code and blocking of access for the wireless communication terminal (1) to the access-controlled communication network modules (23, 33) upon fulfilment of the determined blocking conditions.

9. Access control server (3), which is connectible to a wireless local communication network, which comprises a value code database (32) and which comprises an access control module (31) for checking the access authorization of a wireless communication terminal (1) to the wireless local communication network, the access control module (31) comprising a validation module (311) for validating in a value code database (32) a prepaid value code received from the wireless communication terminal (1) via an air interface (21) of the wireless local communication network, the access control module (31) comprising a clearance module (312) for clearing access to the wireless local communication network for the wireless communication terminal (1), and the access control module (31) comprising a cancellation module (313) for cancelling the received validated value code in the value code database (32), **characterised**
**in that** the access control server (3) comprises a billing module (315) for crediting a monetary amount to an operator of an access point unit (2) of the wireless local communication network identified through the operator identification received from the access point unit (2) which has transmitted the prepaid value code to the access control server (3).

10. The access control server (3) according to claim 9, **characterised in that** the access control module (31) comprises a blocking module (314) for determining blocking conditions based on the received value code and for blocking access to the wireless local communication network for the wireless communication terminal (1) upon fulfilment of the determined blocking conditions.

11. A computer program product comprising: a computer-readable medium with computer program code means, contained therein, for control of a processor of an access control server (3) connectible to a wireless local communication network in such a way that the access control server (3) validates in a value code database (32) a prepaid value code received from a wireless communication terminal (1) over an air interface (21) of the wireless local communication network, that the access control server (3) clears access to the wireless local communication network for the wireless communication terminal (1) and that the access control server (3) cancels in the value code database (32) the received validated value code, **characterised**
**in that** the computer program product comprises further computer program code means which control the processor of the access control server (3) in such a way that the access control server (3) credits a monetary amount to an operator of an access point unit (2) of the wireless local communication network, which operator is identified through an operator identification which has been received from the access point unit (2) which has transmitted the prepaid value code to the access control server (3).

12. The computer program product according to claim 11, **characterised in that** it further comprises computer program code means which control the processor of the access control server (3) in such a way that the access control server (3) determines blocking conditions based on the received value code and blocks access to the wireless local communication network for the wireless communication terminal (1) upon fulfilment of the determined blocking conditions.

## Revendications

1. Réseau de communication local sans fil, comprenant : au moins un terminal de communication sans fil (1),
au moins une unité de point d'accès (2) munie d'un émetteur/récepteur (22) pour la communication avec le terminal de communication sans fil (1) par une interface air (21),
un serveur de contrôle d'accès (3) relié à l'unité de point d'accès (2) avec un module de contrôle d'accès (31) pour le contrôle de l'autorisation d'accès du terminal de communication sans fil (1),
un module de contrôle d'accès (31) pour le contrôle de l'autorisation d'accès du terminal de communication sans fil (1),
dans le terminal de communication sans fil (1) un module d'interrogation (12) pour la transmission d'un code de valeur payé à l'avance par l'interface air (21) à l'unité de point d'accès (2),
une banque de données de codes de valeur (32),
dans le module de contrôle d'accès (31) un module de validation (311) pour la validation du code de valeur reçu dans la banque de données de codes (32),
dans le module de contrôle d'accès (31), un module de libération (312), pour la libération de l'accès aux modules de réseau de communication à accès contrôlé (23, 33) pour le terminal dé communication sans fil (1) et
dans le module de contrôle d'accès (31) un module de dévalorisation (313) pour dévaloriser le code de valeur validé reçu dans la banque de données de codes de valeur (32), **caractérisé**
**en ce que** l'unité de point d'accès (2) comprend un module de communication (23) pour la transmission du code de valeur payé en avance et une identification d'opérateur de l'unité de point d'accès au serveur de contrôle d'accès (3).

2. Réseau de communication local sans fil selon la revendication 1, **caractérisé en ce que** le serveur de contrôle d'accès (3) comprend un module de calcul (315) pour le crédit d'un montant numéraire pour l'opérateur de l'unité de point d'accès (2) qui est identifié par l'identification d'opérateur.

3. Réseau de communication local sans fil selon la selon l'une des revendications 1 ou 2, **caractérisé en ce que** le module de contrôle d'accès (31) comprend un module de blocage (314) pour la détermination de conditions de blocage en se basant sur le code de valeur reçu pour le blocage de l'accès aux modules de réseaux de communication à accès contrôlé (23, 33) pour le terminal de communication sans fil (1) lors de la survenance des conditions de blocage définies.

4. Réseau de communication local sans fil selon la selon l'une des revendications 1 ou 2, **caractérisé en ce que** le module de contrôle d'accès (31) comprend un module de blocage (314) pour le blocage de l'accès aux modules de réseaux de communication à accès contrôlé (23, 33) pour le terminal de communication sans fil (1) conformément à une période fixée de libération ou conformément à un volume fixé de données.

5. Réseau de communication local sans fil selon la selon l'une des revendications 1 à 4, **caractérisé en ce que** les modules de réseau de communication à accès contrôlé (23, 33) comprennent un module de communication (23, 33) pour la communication de données avec d'autres unités de communication par l'intermédiaire du réseau de communication local sans fil.

6. Procédé de contrôle d'accès pour un réseau de communication local sans fil, procédé dans lequel un code de valeur payé en avance est transmis par un terminal de communication sans fil (1) par l'intermédiaire d'une interface air (21) du réseau de communication local sans fil à une unité de point d'accès (2), procédé dans lequel le code de valeur obtenu est validé pour le contrôle de l'autorisation d'accès du terminal de communication sans fil (1) dans une banque de données de codes de valeur (32), procédé dans lequel l'accès aux modules de réseau de communication à accès contrôlé (23, 33) est libéré pour le terminal de communication sans fil (1) et le code de valeur validé reçu est dévalué dans la banque de données de codes de valeur (32), **caractérisé par** la transmission du code de valeur prépayé et d'une identification d'opérateur par l'unité de point d'accès (2) à un serveur de contrôle d'accès (3).

7. Procédé de contrôle d'accès selon la revendication 6, **caractérisé par** le crédit d'un montant numéraire par le serveur de contrôle d'accès (3) pour l'opérateur de l'unité de point d'accès (2), lequel a été identifié par l'identification d'opérateur.

8. Procédé de contrôle d'accès selon l'une des revendications 6 ou 7, **caractérisé par** la détermination de conditions de blocage se basant sur un code de valeur reçu et blocage de l'accès aux modules de réseau de communication à accès contrôlé (23, 33) pour le terminal de communication sans fil (1) lors de la survenance des conditions de blocage définies.

9. Serveur de contrôle d'accès (3) qui peut être relié à un réseau de communication sans fil local, qui comprend une banque de données de codes de valeur (32) et un module (31) pour le contrôle de l'autorisation d'accès d'un terminal de communication sans fil (1) à un réseau de communication local sans fil, le module de contrôle d'accès (31) comprenant un module de validation (311), pour la validation d'un code de valeur prépayé reçu par le terminal de communication sans fil (1) par l'intermédiaire d'une interface Air (21) du réseau de communication local sans fil dans la banque de données de codes de valeur (32), le module de contrôle d'accès (31) comprenant un module de libération (312) pour la libération de l'accès à un réseau de communication local sans fil pour le terminal de communication sans fil (1) et le module de contrôle d'accès (31) comprenant un module (313) pour la dévalorisation du code de valeur validé reçu dans la banque de données de codes de valeur (32), **caractérisé**
**en ce que** le serveur de contrôle d'accès (3) comprend un module de calcul (315) pour le débit d'un montant numéraire pour un opérateur d'une unité de point d'accès (2) du réseau de communication local sans fil qui est identifié par une identification d'opérateur qui a été reçue par l'unité de point d'accès (2) qui a envoyé le code de valeur prépayé au serveur de contrôle d'accès (3).

10. Serveur de contrôle d'accès (3) selon la revendication 9, **caractérisé en ce que** le module de contrôle d'accès (31) comprend un module de blocage (314) pour la détermination de conditions de blocage en se basant sur le code de valeur reçu pour le blocage de l'accès au réseau de communication sans fil (23, 33) pour le terminal de communication sans fil (1) lors de la survenance des conditions de blocage définies

11. Produit de programme informatique comprenant : un support lisible par ordinateur contenant des moyens de code de programme informatique pour la commande d'un processeur d'un serveur de contrôle d'accès (3) pouvant être relié à un réseau de communication local sans fil, de sorte que le serveur de contrôle d'accès (3) valide dans la banque de données de codes de valeur (32) un code de valeur prépayé reçu depuis un terminal de communication sans fil (1) par une interface air (21) du réseau de communication local sans fil, de sorte que le serveur de contrôle d'accès (3) libère l'accès à un réseau de communication local sans fil pour le terminal de communication sans fil (1) et de sorte que le serveur de contrôle d'accès (3) dévalorise le code de valeur validé reçu dans la banque de données de codes de valeur (32), **caractérisé**
**en ce que** le produit de programme informatique comprend d'autres moyens de code de programme informatique qui pilotent le processeur du serveur de contrôle d'accès (3) de sorte que le serveur de contrôle d'accès (3) crédite un montant numéraire pour un opérateur d'une unité de point d'accès (2) du réseau de communication local sans fil, opérateur qui est identifié par une identification d'opérateur qui a été réceptionnée par l'unité de point d'accès (22) qui a envoyé le code de valeur prépayé au serveur de contrôle d'accès (3).

12. Produit de programme informatique selon la revendication 11, **caractérisé en ce qu'**il comprend d'autres moyens de code de programme informatique qui pilotent le processeur du serveur de contrôle d'accès (3) de sorte que le serveur de contrôle d'accès (3) définit des conditions de blocage en se basant sur le code de valeur reçu et bloque l'accès au réseau de communication local sans fil pour le terminal de communication sans fil (1) lors de la survenance des conditions de blocage définies.
